# EUROPEAN PATENT SPECIFICATION

(11) **EP 2 116 102 B1**
(45) Date of publication and mention of the grant of the patent: **18.05.2011**
(21) Application number: 07703475.9
(22) Date of filing: 14.02.2007
(51) Int. Cl.: H04R 25/00, H04B 1/38, G09B 21/04, H04R 5/033, H04S 7/00

(54) **WIRELESS COMMUNICATION SYSTEM AND METHOD**
DRAHTLOSES KOMMUNIKATIONSSYSTEM UND VERFAHREN
SYSTÈME ET PROCÉDÉ DE COMMUNICATION SANS FIL

(43) Date of publication of application: 11.11.2009
(73) Proprietor: Phonak AG, 8712 Stäfa (CH)
(72) Inventor: PLATZ, Rainer, CH-2013 Colombier (CH)
(74) Representative: Schwan - Schwan - Schorer
(86) International application number: PCT/EP2007/001290
(87) International publication number: WO 2008/098590

(56) References cited:
- EP-A- 1 531 650
- EP-A- 1 657 892
- EP-A- 1 657 958
- WO-A-01/55833
- DE-U1- 29 812 022
- US-A1- 2003 118 197

## Description

The present invention relates to a wireless communication system comprising a transmission unit comprising a microphone arrangement having at least two spaced-apart microphones, a first ear unit to be worn at the right side of a user's head and a second ear unit to be worn at the left side of the user's head, with each ear unit comprising a receiver unit for receiving audio signals transmitted from the transmission unit via a wireless audio link and means for stimulating the user's hearing.

Usually in such systems - wherein the receiver unit usually is worn at ear-level - the wireless audio link is an FM radio link. The benefit of such systems is that sound captured by a remote microphone at the transmission unit can be presented at a high sound pressure level and good signal-to-noise ration (SNR) to the hearing of the user wearing the receiver unit at his ear(s).

According to one typical application of such wireless audio systems, the stimulating means is a loudspeaker which is part of the receiver unit or is connected thereto. Such systems are particularly helpful for being used in teaching e.g. (a) normal-hearing children suffering from auditory processing disorders (APD), (b) children suffering a unilateral loss (one deteriorated ear), or (c) children with a mild hearing loss, wherein the teacher's voice is captured by the microphone of the transmission unit, and the corresponding audio signals are transmitted to and reproduced by the receiver unit worn by the child, so that the teacher's voice can be heard by the child at an enhanced level, in particular with respect to the background noise level prevailing in the classroom. It is well known that presentation of the teacher's voice at such enhanced level supports the child in listening to the teacher.

According to another typical application of wireless audio systems the receiver unit is connected to or integrated into a hearing instrument, such as a hearing aid. The benefit of such systems is that the microphone of the hearing instrument can be supplemented with or replaced by the remote microphone which produces audio signals which are transmitted wirelessly to the FM receiver and thus to the hearing instrument. FM systems have been standard equipment for children with hearing loss (wearing hearing aids) and deaf children (implanted with a cochlear implant) in educational settings for many years.

Hearing impaired adults are also increasingly using FM systems. They typically use a sophisticated transmitter which can (a) be pointed to the audio-source of interest (during e.g. cocktail parties), (b) put on a table (e.g. in a restaurant or a business meeting), or (c) put around the neck of a partner/speaker and receivers that are connected to or integrated into the hearing aids. Some transmitters even have an integrated Bluetooth module giving the hearing impaired adult the possibility to connect wirelessly with devices such as cell phones, laptops etc.

The merit of wireless audio systems lies in the fact that a microphone placed a few inches from the mouth of a person speaking receives speech at a much higher level than one placed several feet away. This increase in speech level corresponds to an increase in signal-to-noise ratio (SNR) due to the direct wireless connection to the listener's amplification system. The resulting improvements of signal level and SNR in the listener's ear are recognized as the primary benefits of FM radio systems, as hearing-impaired individuals are at a significant disadvantage when processing signals with a poor acoustical SNR.

CA 2 422 449 A2 relates to a communication system comprising an FM receiver for a hearing aid, wherein audio signals may be transmitted from a plurality of transmitters via an analog FM audio link and wherein, in addition, the transmitters may transmit configuration parameters for adjusting the FM receiver via a separate digital control channel which may use FSK (Frequency Shift Keying) modulation.

EP 1 531 650 A2 relates to a communication system comprising a transmission unit having two spaced-apart microphones for generating an audio signal which is transmitted as a stereo audio signal via two wireless channels having different frequency to two hearing aids worn at a user's right ear and left ear, respectively, with one of the channels being received and reproduced by one of the hearing aids and with the other channel being received and reproduced by the other hearing aid. It is also mentioned that these two wireless transmission channels may be used for multi-language transmission.

DE 298 12 022 U1 relates to a wireless audio system comprising a body-worn transmission unit comprising a stereo microphone and a receiver device which could be a headset or a pair of earpieces. It is mentioned that means are provided for compensating the spatial distance between the microphone and the ear piece, however, with no example being given how such means could be realized. Further, it is stipulated as an object that such compensation means should be capable of providing the earpiece with electrical signals in such a manner that the spatial information is provided to the earpiece, with no solution to this object being described. WO 97/14268 relates to a binaural hearing aid system in which audio signals are exchanged between the two hearing aids and in which stereo signals are processed.

EP 1 643 801 A2 relates to a system comprising a plurality of hearing aids which are worn by different users and which are adapted for bidirectional communication with each other via a digital link, The data exchange between the hearing aids includes control parameters, such as the presently used hearing aid program sound field characteristics and audio signals captured by the respective hearing aid by the built-in microphone. The hearing_aids may be organized according to a master-slave architecture.

Usually in FM systems some audio signal processing, in particular acoustic beam forming, takes place in the transmission unit prior to transmitting the audio signals to the ear units, with typically the same (mono) signal being transmitted to both ear units. As a consequence, the user usually does not have any information as to where the FM audio signal is originating from, i.e. there is no spatial information comprised in the received audio signal. Further, the user usually has no possibility to influence the audio signal processing scheme applied in the transmission unit.

It is an object of the invention to provide for a wireless communication system which enables the presence of spatial information in the audio signals received at the ear units and which enables particularly flexible processing of the audio signals captured by the transmission unit. It is a further object to provide for a corresponding wireless communication method.

This object is achieved by a communication method as defined in claim 1. The invention is beneficial in that, by dedicating a separate audio channel to each microphone of the transmission unit and by receiving both of the audio signal channels at at least one of the ear units and generating processed audio signals in at least one of the ear units taking into account the audio signals received via the two audio signal channels, on the one hand stereo signals including spatial information are available at the ear level and on the other hand audio signal processing can be individually influenced at the ear level, either manually or automatically. For example, switching between different modes of acoustic beam forming and other audio signal processing can be done by the user. Further, system complexity is reduced, since in most cases powerful digital signal processors (DSP) are present anyway at the ear level. By providing audio signal processing of the microphone signals of the transmission unit here, the DSP requirements for the transmission unit can be largely reduced.

Preferred embodiments of the invention are defined in the dependent claims. Examples of the invention will be described by reference to the attached drawings, wherein:
- Fig. 1: is a block diagram of a first embodiment of a communication system employing the method according to the invention, with two variants being shown;
- Fig. 2: is a block diagram of a second embodiment of the invention;
- Fig. 3: is a schematic illustration of an operation mode of the invention, wherein the distance of the remote microphones can be compensated; and
- Fig. 4: is a schematic illustration of an operation mode of the invention, which enables the formation of a lighthouse beam.

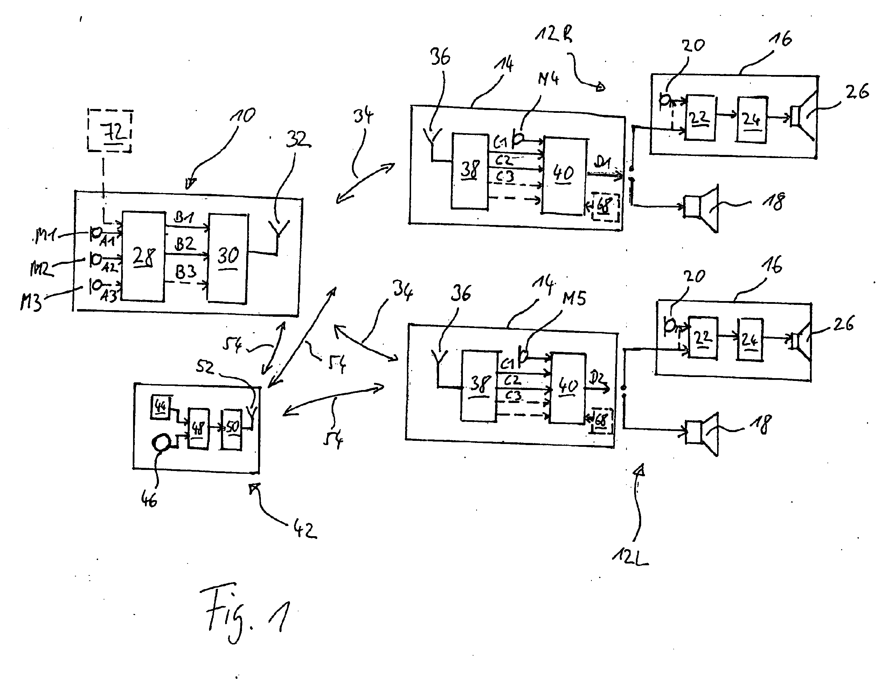

Fig. 1 shows a block diagram of an example of a wireless communication system comprising a transmission unit 10, a right ear unit 12R to be worn at the right side of a user's head and a left ear unit 12L to be worn at the left side of the user's head. Usually the ear units 12R and 12L will be worn at the respective ear of the user. According to Fig. 1 each ear unit 12R, 12L comprises a receiver unit 14 which may supply its output signal to a hearing instrument 16 which is mechanically and electrically connected to the receiver unit 14, for example, via a standardized interface (such as a so called "audio shoe"), or, according to a variant, to a loudspeaker 18, which is worn at least in part in the user's ear canal (for example, the loudspeaker itself may be located in the ear canal or a sound tube may extend from the loudspeaker located at the ear into the ear canal).

The hearing instrument 16 usually will be a hearing aid, such as of the BTE (Behind The Ear)-type, the ITE (In The Ear)-type or the CIC (Completely In the Canal)-type. Typically, the hearing instrument 16 comprises one or more microphones 20, a central unit 22 for performing audio signal processing and for controlling the hearing instrument 16, a power amplifier 24 and a loudspeaker 26.

The transmission unit 10 comprises at least two spaced-apart microphones M1 and M2 for capturing audio signals A1 and A2, respectively, which are supplied to an audio signal processing unit 28, which may generate pre-processed audio data B1 and B2, which are supplied to a transceiver unit 30 connected to an antenna 32 for transmitting the pre-processed audio data B1 and B2 as essentially separate audio channels via a wireless link 34 to each of the receiver units 14. The audio signal processing unit 28 is realized by a DSP.

The transmission unit 10 is designed in such a manner that a separate audio signal channel is dedicated to each of the microphones M1, M2, i.e. it includes at least a first audio channel and a second audio channel, with both channels being transmitted via the audio link 34 in such a manner that they are received separately at each of the receiver units 14.

Usually the wireless link 34 will be a radio frequency link, for example, an analog frequency modulation (FM) link or a digital link. In an analog FM link one of the side-bands carries one of the audio channels and the other side-band carries the other audio channel. If the link is digital it may use, for example, GFSK modulation. The digital link may use, for example, the 2.4 GHz ISM band including frequency hopping. In the digital case the distinction between the two audio channels is realized by a corresponding communication protocol by which data concerning the right channel are transmitted in data packets distinguished from the data packets of the left channel.

In some cases audio signal processing of the audio signals A1 and A2 in the transmission unit 10 may be restricted to the absolute minimum signal processing necessary for transmission via the audio link 34, such as data reduction, coding and decoding (codec), so that each of the audio signal channels of the link 34 corresponds to the audio signals as captured by one of the microphones M1, M2. In other cases there may be some pre-processing of the microphone signals A1 and A2 taking into account to some extent the audio signals A2, A1 captured by the other one of the microphones M2, M1. However, there will be no significant mixing of the two channels prior to transmission, i.e. one of the channels will transmit primarily the audio signals as captured by the microphone M1 and the other channel will transmit primarily audio signals as captured by the microphone M2.

Such essentially unmixed transmitted audio signals are considered as "raw" audio signals.

Each of the receiver units 14 comprises an antenna 36, a transceiver unit 38, a digital signal processing unit 40 and optionally one or more microphones (labeled M4 in the ear unit 12R and M5 in the ear unit 12L). Preferably, the hardware of both receiver units 14 is identical and it is decided by parameterization and/or software whether the respective transmission unit 14 belongs to the right ear unit 12R or to the left ear unit 12L, i.e. whether it will supply primarily the right audio signal channel or the left audio signal channel as the output D1 and D2, respectively to the loudspeaker 18 or the hearing instrument 16.

In the simplest case the link 34 is unidirectional, with the transceiver unit 30 serving as transmitter only and the transceiver unit 38 serving as a receiver only.

Each of the receiver units 14, i.e. each of the transceiver units 38, is capable of receiving both audio signal channels of the wireless link 34. Each transceiver unit 38 supplies the signals received via the first audio signal channel as audio signals C1 and the signal received via the second audio signal channel as audio signals C2 to the audio signal processing unit 40, i.e. the audio signals C1 correspond essentially to the (pre-processed) audio signals B1, and the audio signals C2 correspond essentially to the (pre-processed) audio signals B2. In the audio signal processing unit the received audio signals C1 and C2 will be processed in order to generate processed audio signals which take into account both the audio signals C1 and C2. For each of the transmission units 14 these processed audio signals are provided as a single channel output (in Fig. 1 the processed audio signals of the receiver unit 14 of the right unit 12R are labeled D1, whereas the processed audio signals of the receiver unit 14 of the left ear unit 12L are labeled D2). In most cases the audio signal processing algorithm applied in the audio signal processing unit 40 will be parameterized differently for the right ear unit 12R and the left ear unit 12L, so that also the processed audio signals D1 and D2 will be different. The audio signal processing units 40 are realized by a DSP.

If ear-level microphones M4 and M5 are provided, in most cases the audio signals captured by these microphones M4, M5 will be used as further input to the audio signal processing unit 40 and will be taken into account when generating the processed audio signals D1D2 from the received audio signals C1 and C2.

According to one embodiment the processed audio signals D1/D2 are supplied to the loudspeaker 18 for being reproduced to the respective ear of the user. According to another embodiment the processed audio signals D1/D2 are supplied as input to the hearing instrument 16. To this end, the processed audio signals D1/D2 may be supplied to a separate audio input of the audio signal processing unit 22, which receives also the audio signals captured by the microphones 20 of the hearing instrument 16. Alternatively, the processed audio signals D1/D2 may be supplied to an audio input which is connected in parallel to one of the microphones 20 of the hearing instrument 16 (see dashed lines in Fig. 1). In the hearing instrument 16 the processed audio signals D1/D2, after processing in the audio signal processing unit 22 and amplification in the amplifier 24, will be supplied alone or in combination with the audio signals captured by the microphones 20 to the loudspeaker 26 of the hearing instrument 16.

The communication system may also comprise a remote control 42 for allowing manual control of the ear units 12R, 12L or the transmission unit 10 by the user. Such remote control 42 may comprise a first control element 44 and a second control element 46 to be operated manually by the user, a central unit 48, a transceiver 50 and an antenna 52 in order to transmit control commands via wireless link 54 to the receiver units 14(control commands supplied to the processing units 40 are indicated by dashed lines) or the transmission unit 10. The link 54 may use the same channel as the link 34, in particular, if the link 34 is digital. Alternatively, the link 54 may be an inductive link, such as a FSK modulated link at 41 kHz or an OOK modulated link at 8 kHz, which, however, have a reach of only of the order of 1 m.

The transmission unit 10 may either be designed to be worn at the body of the user of the ear units 12R, 12L or it may be designed as a portable device which allows the user to hold it in his hand, to place it on a table in a meeting or to give it to another person for capturing this person's voice. A typical example for the latter case is the use of the transmission unit 10 by a teacher in a class of hearing-impaired students (in this case the transmission unit will be connected to the hearing instrument 16) or a class including APD-children (in this case the receiver units 14 will be provided with the loudspeaker 18). The user of the ear units may utilize the portable device for capturing sound signals, for example, the voice of a person speaking to the user, at a position other than the ear level. In such applications the remote control 42 might be integrated within the transmission unit 10.

In the following, examples of the audio signal processing modes performed by the audio signal processing units 40 will be described.

In the most simple case the two audio channels, i.e. the audio signals C1 and C2 received by the receiver unit 14, will remain essentially unmixed. The audio signal C1 (corresponding essentially to the audio signal A1 captured by the microphone M1) will become the processed audio signal D1 provided by the audio signal processing unit 40 of the right ear unit 12R, and the audio signal C2 (corresponding essentially to the audio signals A2 captured by the microphone M2) will essentially become the processed audio signal D2 provided by the audio signal processing unit 40 of the left ear unit 12L. In this case the microphones M1 and M2 will function essentially as a wireless remote stereo microphone, with the channel A1 being essentially supplied to the user's right ear and the channel A2 being essentially provided to the user's left ear. Thereby the user is supplied with sound directionality information as captured at the location of the microphones M1, M2.

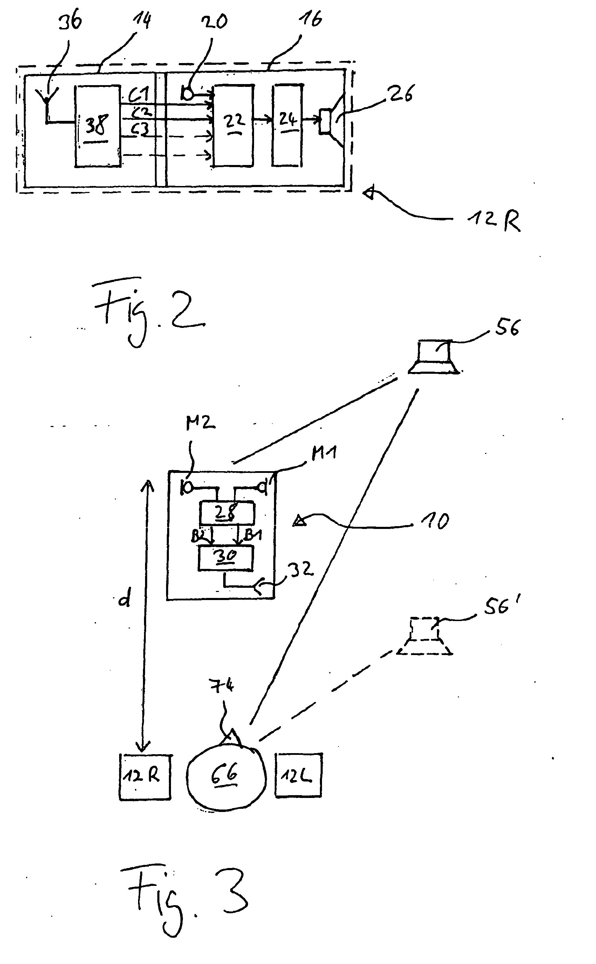

However, if such unprocessed stereo audio signal is reproduced to the user's ears, an audio source 56 will not be perceived at its actual location, but rather it will be perceived at a virtual location 56' which corresponds to the actual location 56 shifted by the distance d between the microphones M1, M2 of the transmission unit 10 and the ear units 12R, 12L, see Fig. 3.

In order to provide for a more natural spatial perception by the user, the audio signals may be compensated for the distance *d* by estimating the distance *d,* i.e. the distance between the microphones M1, M2 of the transmission unit 10 and one of the ear units 12R, 12L, and by taking into account this estimated distance *d* in the audio signal processing in the audio signal processing unit 40. More in detail, the phase and/or level differences between the audio signals A1 and A2 (which corresponds to the phase and/or level differences between the received audio signals C1 and C2) is adjusted according to the estimated value of the distance *d.* Such phase and/or level adjustment is achieved by introducing a corresponding time delay and/or level difference between the audio signals C1 and C2 in the audio signal processing unit 40 such that the processed audio signals D1 and D2 have a time delay and/or level difference relative to each other which corresponds to the adjusted phase and/or level difference.

The distance *d* can be estimated, in the most simple case, by manual selection of a corresponding value by the user of the ear units 12R, 12L, for example, by corresponding actuation of the control element 44 of the remote control 42, and/or the audio signal processing units 40 may use preset values which attributed to typical use cases and which may be activated automatically or manually. Such methods are appropriate only if the distance *d* usually is more or less constant for a relatively long time period and may change only between a few predictable values.

A more generally applicable approach is to determine the delay between the arrival time of a characteristic sound event at the microphones M1, M2 of the transmission unit 10 and the arrival time of the same sound event at the microphone M4 or M5 of the receiver unit 14 (in such calculation constant and additive time delays caused by the system architecture, such as the various signal processing elements 28, 40 and the transceivers 30, 38, have to be taken into account).

The delay between the arrival times may be determined by identifying a significantly characteristic sound event, for example, a strongly impulsive sound event, such as closing a door, placing a pencil on a table, a cough, turning over of pages of a book or journal, etc., and comparing the respective arrival times of the identified sound event. Alternatively or in addition, a correlation analysis may be performed on the received audio signals C1 C2 and the audio signals captured by the microphone M4/M5 at the ear level. It is to be noted that such distance estimation has to be done only from time to time, for example, every five seconds.

As already mentioned above, in most cases the audio signals B1, B2 transmitted by the transmission unit 10 (and hence audio signals C1, C2 received by the receiver units 14) will be "raw" audio signals. In this case the audio signal processing can be significantly influenced at the ear level, i.e. by corresponding audio signal processing in the audio signal processing units 40 of the ear units 12R, 12L. For example, it is enabled thereby to perform acoustic beam forming at the ear level by using the received audio signals C1, C2 as input to an acoustic beam forming algorithm. For example, the acoustic beam forming performed in the audio signal processing units 40 can be influenced by the user with regard to the angle, i.e. the direction, of the formed acoustic beam, the angular width of the formed acoustic beam and/or the degree or type of acoustic beam forming. To this end, the user may actuate the control elements 44 and 46 of the remote control 42 accordingly.

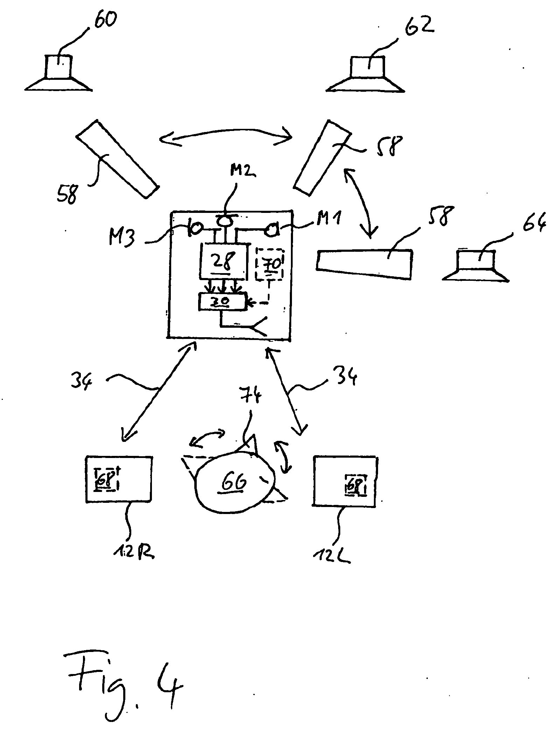

In Fig. 4 an example of an operation mode enabling "lighthouse" beam forming, i.e. forming of a beam which can be rotated by 360 degrees, is illustrated. In this case the transmission unit 10 includes at least three microphones M1, M2 and M3, with the audio signal A3 captured by the microphone M3 being treated in the same manner as the audio signals A1 and A2 captured by the microphones M1 and M2, respectively, i.e. a separate audio channel is attributed to the audio signal A3 captured by the microphone M3. The audio signal A3 may be pre-processed in the audio signal processing unit 28 in order to become pre-processed audio signal B3 which is transmitted by the transceiver 30 to the receiver units 14, where it is received as audio signal C3 which is supplied to the audio signal processing unit 40 of each receiver unit 14 (this third audio channel is indicated by dashed lines in Fig. 1).

As illustrated in Fig. 4, by applying appropriate beam forming algorithms in the audio signal processing units 40 of the receiver units 14 on three audio signal channels C1, C2 and C3, an acoustic beam may be formed which can be rotated by 360 degrees around the microphones M1, M2 and M3, usually in a plane which is substantially parallel to the floor. In Fig. 4 the variation of the direction/angle of the acoustic beam 58 between three different sound sources 60, 62 and 64 is shown. The direction of the beam 58 can be set manually by the user by corresponding manual operation of the control element 46 of the remote control 42.

The control element 46 for selecting the angle of the formed acoustic beam may comprise for example a joy stick, a circular touch-screen element, four or eight cursor buttons or a touch-sensitive watch glass with several segments.

According to an alternative embodiment the direction/angle of the acoustic beam 58 is controlled by the orientation of the user's head 66, preferably in such a manner that the beam 58 is automatically directed into the direction into which the user is presently looking.

To this end, at least one of the ear units 12R, 12L may be provided with a unit 68 for measuring the orientation of the respective ear unit - and hence the orientation of the user's head 66 - in a plane essentially parallel to the floor. Similarly, the transmission unit 10 may be provided with a unit 70 for determining the angular orientation of the transmission unit 10 - and hence the microphones' M1, M2 and M3 orientation - in the same plane, i.e. a plane substantially parallel to the floor. The units 68 and 70 may comprise a compass and/or a gyroscope. The absolute orientation of the transmission unit 10 on a plane substantially parallel to the floor is measured by the unit 70, and the result is transmitted via the wireless link 34 to the receiver units 14, where it is supplied to the audio signal processing units 40. The absolute orientation of the ear unit 12R or 12L on a plane essentially parallel to the floor is measured by the unit 68, and the result likewise is supplied to the audio signal processing units 40, in which the beam forming based on the audio signal channels C1, C2 and C3 is controlled according to the measured absolute orientations. To this end, the relative angular orientation between the respective unit 12R, 12L - and hence the user's head 66 - and the transmission unit 10 is calculated from the absolute respective orientations measured by the units 68 and 70. Usually the angle of the beam 58 will be controlled by the audio signal processing units 40 in such a manner that it essentially equals the direction of the user's nose 74 in the plane in which the absolute angular orientations are measured by the units 68 and 70, i.e. in the plane essentially parallel to the floor.

Alternatively or in addition to acoustic beam forming other types of audio signal processing may be performed by the audio signal processing units 40 at the ear level, such as noise cancelling and frequency-dependent gain for improved speech recognition. The user may select, by operating the remote control 42 or by activating a suited user interface (not shown) on the receiver unit 14 or hearing instrument 16, the desired one of a plurality of audio signal processing modes.

In addition to the mentioned use for estimating the distance d between the transmission unit 10 and the ear units 12R, 12L, the audio signals captured by the microphones M4, M5 of the receiver units 14 may be taken into account in the generation of the processed audio signals D1 and D2, for example, in order to eliminate acoustic background noise in the audio signals, C1, C2, C3 received from the transmission unit 10. If one combines the audio signals captured by the microphones M1, M2, M3 of the transmission unit 10 with the audio signals captured by the ear level microphones M4, M5, 20, one obtains a system of distributed signal sources which are spaced apart relatively far. Thereby very efficient noise cancelling may be obtained. If one assumes, for example, that the microphones M1, M2 of the transmission unit 10 are located substantially closer to the target signal source (e.g. a person talking to the user) than the ear-level microphones M4 or M5, the audio signals captured by M1, M2 comprise a larger proportion of the target signal, whereas the ear-level microphones M4, M5 essentially capture the background noise signal. By having exact knowledge of the background noise (i.e. the signals captured by M4, M5) this background noise may be removed very efficiently from the target signal (i.e. the signal captured by M1, M2).

According to a further embodiment the third channel of the transmission unit 10 may be used to transmit audio signals from an audio signal source 72 other than one of the microphones M1, M2 of the transmission unit 10, such as a music player, a mobile phone or a radio communication device, to at least one of the receiver units 14. These audio signals may be supplied to the transmission unit 10 via a cable connection or via a wireless link, such as a Bluetooth link. According to a modified embodiment, one of the stereo channels of the microphones M1, M2 may be used temporarily for such audio signal transmission. The user may choose or select one of the channels, for example by operating the remote control 42 accordingly. For example, the signals may be selected within the audio signal processing units 40 in such a manner that the audio signals from the remote audio signal source are supplied to one ear while the audio signals captured by the microphones M1, M2 of the transmission unit 10 are supplied to the other ear.

In the embodiments shown in Fig. 1 the receiver unit 14 is either supplied with a loudspeaker 18 or is connected to a hearing instrument 16, with the audio signal processing with regard to the received audio signals C1, C2 being carried-out in the audio signal processing unit 40 of the receiver unit 14.

In Fig. 2 an alternative embodiment is shown for one of the ear units in which the receiver unit 14 does not comprise an audio signal processing unit 40, but rather supplies the received audio signals C1, C2 (and in some cases C3) directly (or after some pre-processing, such as pre-amplification) to respective audio inputs of the hearing instrument 16, with the processing of these audio signals being carried-out in the audio signal processing unit 22 of the hearing instrument 16 rather than in the unit 40 of Fig. 1. In this case, it is not necessary to provide the receiver unit 14 with a microphone M4, M5, since the microphone 20 of the hearing instrument 16 may serve all purposes which have been described above for the microphones M4, M5. The receiver unit 14 may also serve to supply wirelessly received non-audio data, such as control commands from the remote control 42, etc., to the audio signal processing unit 22 of the hearing instrument 16 (as indicated by dashed lines in Fig. 2).

The receiver unit 14 may be connected to the hearing instrument 16 by an appropriate mechanical/electrical interface, such as an "audio shoe", or it may be integrated together with the hearing instrument 16 in a common housing, as indicated by dashed lines in Fig. 2. Such integrated solution is also possible for the respective embodiment shown in Fig. 1.

## Claims

1. A communication method comprising: capturing audio signals by a microphone arrangement of a transmission unit (10) having at least two spaced apart microphones (M1, M2, M3), dedicating a separate audio signal channel (A1, A2, A3, B1, B2, B3) to each microphone, wirelessly transmitting, from the transmission unit, at least a first channel of the audio signals and a second channel of the audio signals to a first ear unit (12R) worn at the right side of a user's head (66) and to a second ear unit (12L) worn at the left side of the user's head, receiving the at least first and second audio signal channel at at least one of the ear units, generating processed audio signals (D1, D2) in at least one of the ear units, by audio signal processing means (22, 40), taking into account the audio signal (C1, C2, C3) received via the at least first and at least second audio signal channel, and stimulating, using means (18, 26) for stimulating the user's hearing, the user's hearing at the right ear and the left ear, respectively, according to the processed audio signals, wherein the transmission unit (10) is worn at the body of the user of the ear units or is a portable device which is held in the user's hand, is placed on a table in a meeting or is given to another person for capturing this person's voice.

2. The method of claim 1, wherein at least one of said ear units (12R, 12L) comprises means (M4, M5, 20, 22, 40) for estimating the distance (*d*) between the microphone arrangement (M1, M2, M3) of the transmission unit (t0) and the respective ear unit and means for compensating in the processed audio signals (D1, D2) said estimated distance by time-delaying and/or level-adjusting the first channel audio signals (D1) and the second channel audio signals (D2) relative to each other according to said estimated distance, with the first channel audio signals primarily being provided to the left ear stimulating means (18, 26) and with the second channel audio signals primarily being provided to the right ear stimulating means (18, 26), wherein the distance estimating means (M4, M5, 20, 22, 40) is adapted to estimate said distance (*d*) by determining the delay between the arrival time of a sound event at the microphone arrangement (M1, M2, M3) of the transmission unit (10) and the arrival time of the same sound event at a microphone (M4, M5, 20) of the ear unit (12R, 12L), with the delay being determined by temporal analysis of the audio signals captured at the microphone arrangement of the transmission unit and the audio signals captured at the microphone of the ear unit, and wherein the distance estimating means (M4, M5, 20, 22, 40) is adapted to determine said delay by correlation analysis of the audio signals captured at the microphone arrangement (M1, M2, M3) of the transmission unit (10) and the audio signals captured at the microphone (M4, M5) of the ear unit (12R, 12L).

3. The method of claim 2, wherein the distance estimating means (M4, M5, 20, 22, 40) is adapted to determine said delay by identifying an impulsive sound event and comparing the arrival times of the identified impulsive sound event at the microphone arrangement (M1, M2, M3) of the transmission unit (10) and at the microphone (M4, M5, 20) of the ear unit (12R, 12L), and wherein the distance estimating means (M4, M5, 20, 22, 40) is adapted for manual selection of the estimated distance and/or comprise preset values attributed to typical use cases.

4. The method of one of the preceding claims, wherein the audio signals transmitted via the at least first channel (B, C1) and second channel (B2, C2) are raw audio signals, wherein the audio signal processing means (22, 40) is adapted for performing acoustic beam forming on the audio signals (C1, C2, C3) received via the first channel and the second channel, wherein the audio signal processing means (22, 40) is selectively operable by the user with regard to the direction and/or angular width of the formed acoustic beam, wherein the microphone arrangement of the transmission unit (10) comprises at least three of the spaced apart microphones (M1, M2, M3), wherein the audio signal processing means (22, 40) is selectively operable by the user to perform selective acoustic beam forming on the respective at least three received channels (C1, C2, C3) of the audio signals within 360 degrees around the microphone arrangement of the transmission unit, wherein the audio signal preceding means (22, 40) is operable by the user to select one of a plurality of audio signal processing modes, wherein the audio signal processing means (22, 40) is operable by the user to select the degree or type of acoustic beam forming, wherein the audio signal processing means (22, 40) is selectively operable by the user via a wireless remote control (42), wherein the remote control (42) comprises a circular control element (46) for manually selecting the width and direction of the formed acoustic beam, wherein the remote control (42) is adapted to use the same link (34) as the at least first and second audio signal channel.

5. The method of claim 4, wherein each of the first (12R) and second ear unit (12L) comprises a microphone (M4, M5, 20) for capturing audio signals to be supplied to the audio signal processing means (22, 40) for being taken into account in the generating of said processed audio signals (D1, D2) for each ear, and wherein the audio signal processing means (22, 40) is adapted to use the audio signals captured at the ear units (12R, 12L) for eliminating background noise from the audio signals (C1, C2, C3) received from the transmission unit (10) in the generating of said processed audio signals (D1, D2).

6. The method of one of claims 4 and 5, wherein the transmission unit (10) and at least one of the ear units (12R, 12L) is provided with means (68, 70) for measuring the relative angular orientation between the user's head (66) and the transmission unit in a plane, wherein the direction of the acoustic beam formed by the audio signal processing means (22, 40) is controllable according to the measured relative angular orientation between the user's head and the transmission unit, wherein said orientation measuring means (68, 70) are adapted to measure said relative angular orientation between the user's head and the transmission unit in a plane substantially parallel to the floor, wherein said orientation measuring means (68, 70) comprise a compass and/of a gyroscope in the transmission unit (10) and the ear unit (12R, 12L), and wherein said orientation measuring means (68) are adapted to measure an absolute angular orientation of the transmission unit (10) and to transmit said measured absolute angular orientation of the transmission unit wirelessly to the respective ear unit (12R, 12L).

7. The method of claim 6, wherein the audio signal processing means is adapted to control the angle of the acoustic beam formed by the audio signal processing means such that it essentially equals the direction of the user's nose (74) in the plane in which the relative angular orientation between the user's head (66) and the transmission unit (10) is measured by the orientation measuring means (68, 70).

8. The method of one of the preceding claims, wherein the transmission unit (10) is adapted to transmit audio signals from an audio signal source (72) other than the microphone arrangement (M1, M2, M3) via the second or a third channel (A3, B3, C3) to at least one of the ear units [12R,12L], wherein the audio signal source (72) is a music player, a mobile phone or a radio communication device, and wherein in one of the audio signal processing modes the third channel (C3) is provided to one of the stimulation means (18, 26) while the first (C1) and second channel (C2) are provided to the other one of the stimulation means (18, 26).

9. The method of one of the preceding claims, wherein both of the ear units (12R,12L) are capable of receiving both the first (C1) and second audio signal channel (C2) and wherein both of the ear units (12R, 12L) comprise said audio signal processing means (22, 40).

10. The method of one of the preceding claims, wherein the first channel (B1, C1) and the second channel (B2, C2) are transmitted via the upper and the lower side-band, respectively, of a frequency modulation radio frequency link (34).

11. The method of one of claims 1 to 9, wherein the first channel (B1, C1) and the second channel (B2, C2) are transmitted via a digital radio link.

12. The method of one of the preceding claim, wherein the transmission unit (10) is a portable device used by another person for capturing said person's voice and/or used by the user of the ear units (12R, 12L), wherein each ear unit (12R, 12L) comprises a hearing instrument (16), and a receiver unit (14) which is connected to the respective hearing instrument (16) in a detachable manner.

13. The method of one of the preceding claims, wherein the audio signals processing means (40) is included in a receiver unit (14) of at least one of the ear units (12R, 12L).

14. The method of one of claims 1 to 12, wherein the audio signal processing means (22) is included in at least one of the hearing instruments (16).

## Patentansprüche

1. Kommunikationsverfahren, wobei Audiosignale mittels einer Mikrofonanordnung einer Sendeeinheit (10) mit mindestens zwei in Abstand zueinander angeordneten Mikrofonen (M1, M2, M3) aufgefangen werden, jedem Mikrofon ein separater Audiosignalkanal (A1, A2, A3, B1, B2, B3) zugewiesen wird, mindestens ein erster Kanal der Audiosignale und ein zweiter Kanal der Audiosignale von der Sendeeinheit zu einer ersten Ohreinheit (12R), die an der rechten Seite des Kopfes (66) eines Nutzers getragen wird, und zu einer zweiten Ohreinheit (12L), die an der linken Seite des Kopfes des Nutzers getragen wird, drahtlos gesendet werden, der mindestens erste und zweite Audiosignalkanal an mindestens einer der Ohreinheiten empfangen werden, verarbeitete Audiosignale (D1, D2) in mindestens einer der Ohreinheiten mittels Audiosignalverarbeitungsmitteln (22, 40) unter Berücksichtigung der über den mindestens ersten und mindestens zweiten Audiosignalkanal empfangenen Audiosignale (C1, C2, C3) erzeugt werden, und unter Verwendung von Mitteln (18, 26) zum Stimulieren des Gehörs des Nutzers das Gehör des Nutzers am rechten Ohr bzw. am linken Ohr gemäß den verarbeiteten Audiosignalen stimuliert wird, wobei die Sendeeinheit (12) am Körper des Benutzers der Ohreinheiten getragen wird oder ein tragbares Gerät ist, welches in der Hand des Nutzers getragen wird, auf einem Tisch in einer Besprechung platziert wird oder einer anderen Person ausgehändigt wird, um die Stimme dieser Person aufzufangen.

2. Verfahren gemäß Anspruch 1, wobei mindestens eine der Ohreinheiten (12R, 12L) Mittel (M4, M5, 20, 22, 40) zum Abschätzen der Distanz (*d*) zwischen der Mikrofonanordnung (M1, M2, M3) der Sendeeinheit (10) und der jeweiligen Ohreinheit sowie Mittel zum Kompensieren der abgeschätzten Distanz in den verarbeiteten Audiosignalen (D1, D2) mittels Zeitverzögerung und/oder Pegelanpassung der Audiosignale (D1) des ersten Kanals und der Audiosignale (D2) des zweiten Kanals relativ zueinander gemäß der abgeschätzten Distanz aufweist, wobei die Audiosignale des ersten Kanals hauptsächlich den Stimulationsmitteln (18, 26) für das linke Ohr und die Audiosignale des zweiten Kanals hauptsächlich den Stimulationsmitteln (18, 26) für das rechte Ohr zugeführt werden, wobei die Distanzabschätzmittel (M4, M5, 20, 22, 40) ausgelegt sind, um die Distanz (*d*) abzuschätzen, indem die Verzögerung zwischen der Ankunftszeit eines Schallereignisses an der Mikrofonanordnung (M1, M2, M3) der Sendeeinheit (10) und der Ankunftszeit deselben Schallereignisses an einem Mikrofon (M4, M5, 20) der Ohreinheit (12R, 12L) bestimmt wird, wobei die Verzögerung mittels Zeitanalyse der an der Mikrofonanordnung der Sendeeinheit aufgefangenen Audiosignale und der an dem Mikrofon der Ohreinheit aufgefangenen Audiosignale bestimmt wird, und wobei die Distanzabschätzmittel (M4, M5, 20, 22, 40) ausgelegt sind, um die Verzögerung mittels Korrelationsanalyse der an der Mikrofonanordnung (M1, M2, M3) der Sendeeinheit (10) aufgefangenen Audiosignale und der an dem Mikrofon (M4, M5) der Ohreinheit (12R, 12L) aufgefangenen Audiosignale zu bestimmen.

3. Verfahren gemäß Anspruch 2, wobei die Distanzabschätzmittel (M4, M5, 20, 22, 40) ausgelegt sind, um die Verzögerung mittels Identifizieren eines Impulssehallereignisses und Vergleichen der Ankunftszeiten des identifizierten Impulsschallereignisses an der Mikrofonanordnung (M1, M2, M3) der Sendeeinheit (10) und dem Mikrofon (M4, M5, 20) der Ohreinheit (12R, 12L) ausgebildet ist, und wobei die Distanzabschätzmittel (M4, M5, 20, 22, 40) für eine manuelle Auswahl der abgeschätzten Distanz ausgebildet sind und/oder voreingestellte Werte aufweisen, die typischen Nutzungsfällen zugeordnet sind.

4. Verfahren gemäß einem der vorhergehenden Ansprüche, wobei die über den mindestens ersten Kanal (B1, C1) und zweiten Kanal (B2, C2) gesendeten Audiosignale Roh-Audiosignale sind, wobei die Audiosignalverarbeitungsmittel (22, 40) zum Durchführen eines akustischen Beamformings bezüglich der über den ersten Kanal und den zweiten Kanal empfangenen Audiosignale (C1, C2, C3) ausgebildet sind, wobei die Audiosignalverarbeitungsmittel (22, 40) bezüglich der Richtung und/oder der Winkelbreite des gebildeten akustischen Strahls durch den Nutzer selektiv betätigbar sind, wobei die Mikrofonanordnung der Sendeeinheit (10) mindestens drei in Abstand voneinander angeordnete Mikrofone (M1, M2, M3) aufweist, wobei die Audiosignalverarbeitungsmittel (22, 40) durch den Nutzer selektiv betätigbar sind, um ein selektives akustisches Beamforming bezüglich der mindestens drei empfangenen Kanäle (C1, C2, C3) der Audiosignale innerhalb 360° um die Mikrofonanordnung der Sendeeinheit herum auszuführen, wobei die Audiosignalverarbeitungsmittel (22, 40) von dem Nutzer betätigbar sind, um einen Audiosignalverarbeitungsmodus aus einer Mehrzahl von Audiosignalverarbeitungsmodi auszuwählen, wobei die Audiosignalverarbeitungsmittel (22, 40) durch den Nutzer betätigbar sind, um den Grad oder die Art des akustischen Beamformings auszuwählen, wobei die Audiosignalverarbeitungsmittel (22, 40) durch den Nutzer über eine drahtlose Fernbedienung (42) selektiv betätigbar sind, wobei die Fernbedienung (42) ein kreisförmiges Steuerelement (46) aufweist, um die Breite und Richtung des gebildeten akustischen Strahls manuell auszuwählen, wobei die Fernbedienung (42) ausgelegt ist, um dieselbe Verbindung (34) wie der mindestens erste und zweite Audiosignalkanal zu nutzen.

5. Verfahren gemäß Anspruch 4, wobei die erste (12R) und zweite Ohreinheit (12L) ein Mikrofon (M4, M5, 20) aufweisen, um Audiosignale aufzufangen, die den Audiosignalverarbeitungsmitteln (22, 40) zuzuführen sind, um beim Erzeugen der verarbeiteten Audiosignale (D1, D2) für jedes Ohr herangezogen zu werden, und wobei die Audiosignalverarbeitungsmittel (22, 40) ausgebildet sind, um die an den Ohreinheiten (12R, 12L) aufgefangenen Audiosignale zum Eliminieren von Hintergrundrauschen aus den von der Sendeeinheit (10) empfangenen Audiosignalen (C1, C2, C3) beim Erzeugen der verarbeiteten Audiosignale (D1, D2) zu verwenden.

6. Verfahren gemäß einem der Ansprüche 4 und 5, wobei die Sendeeinheit (10) und mindestens eine der Ohreinheiten (12R, 12L) mit Mitteln (68, 70) zum Messen der relativen Winkelorientierung zwischen dem Kopf (66) des Nutzers und der Sendeeinheit in einer Ebene versehen sind, wobei die Richtung des von den Audiosignalverarbeitungsmitteln (22, 40) gebildeten akustischen Strahls gemäß der gemessenen relativen Winkelorientierung zwischen dem Kopf des Nutzers und der Sendeinheit steuerbar ist, wobei die Orientierungsmessmittel (68, 70) ausgebildet sind, um die relative Winkelorientierung zwischen dem Kopf des Nutzers und der Sendeeinheit in einer Ebene im Wesentlichen parallel zum Boden zu messen, wobei die Orientierungsmessmittel (68, 70) einen Kompass und/oder ein Gyroskop in der Sendeeinheit und der Ohreinheit (12R, 12L) aufweisen, und wobei die Orientierungsmessmittel (68) ausgebildet sind, um eine absolute Winkelorientierung der Sendeeinheit (10) zu messen und die gemessene absolute Winkelorientierung der Sendeeinheit drahtlos zu der jeweiligen Ohreinheit (12R, 12L) zu senden.

7. Verfahren gemäß Anspruch 6, wobei die Audiosignalverarbeitungsmittel ausgebildet ist, um den Winkel des von den Audiosignalverarbeitungsmitteln gebildeten akustischen Strahls so zu steuern, dass sie im Wesentlichen der Richtung der Nase (74) des Nutzers in der Ebene entspricht, in welcher die relative Winkelorientierung zwischen dem Kopf (66) des Nutzers und der Sendeeinheit mittels der Orientierungsmessmittel (68, 70) gemessen wird.

8. Verfahren gemäß einem der vorhergehenden Ansprüche, wobei die Sendeeinheit (10) ausgelegt ist, um Audiosignale von einer Audiosignalquelle (72), bei der es sich nicht um die Mikrofonanordnung (M1, M2, M3) handelt, über den zweiten oder einen dritten Kanal (A3, B3, C3) zu mindestens einer der Ohreinheiten (12R, 12L) zu übertragen, wobei es sich bei der Audiosignalquelle um ein Musikabspielgerät, ein Mobiltelefon oder ein Funkkommunikationsgerät handelt, und wobei in einem der Audiosignalverarbeitungsmodi der dritte Kanal (C3) einem der Stimulationsmittel (18, 26) zugeführt wird, während der erste (C1) und der zweite Kanal (C2) dem anderen der Stimulationsmittel (18, 26) zugeführt werden.

9. Verfahren gemäß einem der vorhergehenden Ansprüche, wobei beide Ohreinheiten (12R, 12L) dazu in der Lage sind, sowohl den ersten (C1) als auch den zweiten Audiosignalkanal (C2) zu empfangen, und wobei beide Ohreinheiten (12R, 12L) die Audiosignalverarbeitungsmittel ((22, 40) aufweisen.

10. Verfahren gemäß einem der vorhergehenden Ansprüche, wobei der erste Kanal (B1, C1) und der zweite Kanal (B2, C2) über das obere und bzw. das untere Seitenband einer frequenzmodulierten Funkfrequenzverbindung (34) gesendet werden.

11. Verfahren gemäß einem der Ansprüche 1 bis 9, wobei der erste Kanal (B1, C1) und der zweite Kanal (B2, C2) über eine digitale Funkverbindung gesendet werden.

12. Verfahren gemäß einem der vorhergehenden Ansprüche, wobei es sich bei der Sendeeinheit (10) um ein tragbares Gerät handelt, welches von einer anderen Person benutzt wird, um die Stimme der Person aufzufangen, und/oder welches von dem Nutzer der Ohreinheiten (12R, 12L) benutzt wird, wobei jede Ohreinheit (12R, 12L) ein Hörgerät (16) und eine Empfängereinheit (14) aufweist, welche mit dem jeweiligen Hörgerät (16) in lösbarer Weise verbunden ist.

13. Verfahren gemäß einem der vorhergehenden Ansprüche, wobei die Audiosignalverarbeitungsnaittel (40) in einer Empfängereinheit (14) mindestens einer der Ohreinheiten (12R, 12L) enthalten sind.

14. Verfahren gemäß einem der Ansprüche 1 bis 12, wobei die Audiosignalverarbeitungsmittel (22) in mindestens einem der Hörgeräte (18) vorgesehen sind.

## Revendications

1. Procédé de communication, comprenant : la capture de signaux audio par un agencement de microphones d'une unité d'émission (10) comportant au moins deux microphones mutuellement espacés (M1, M2, M3), l'attribution d'un canal de signal audio séparé (A1, A2, A3, B1, B2, B3) à chaque microphone, la transmission sans fil, à partir de l'unité d'émission, au moins d'un premier canal des signaux audio et d'un deuxième canal des signaux audio à une première unité d'oreille (12R) portée du côté droit d'une tête (66) d'un utilisateur et à une deuxième unité d'oreille (12L) portée du côté gauche de la tête de l'utilisateur, la réception desdits au moins premier et deuxième canaux de signaux audio par au moins l'une des unités d'oreille, la génération de signaux audio traités (D1, D2) dans au moins l'une des unités d'oreille, par des moyens de traitement du signal audio (22, 40), la prise en compte des signaux audio (C1, C2, C3) reçus par l'intermédiaire dudit au moins premier et dudit au moins deuxième des canaux de signaux audio, et la stimulation, à l'aide de moyens (18, 26) pour stimuler l'audition de l'utilisateur, de l'audition de l'utilisateur à l'oreille droite et à l'oreille gauche, respectivement, en fonction des signaux audio traités, l'unité d'émission (10) étant portée sur le corps de l'utilisateur des unités d'oreille ou étant un dispositif portable qui est tenu dans la main de l'utilisateur, qui est disposé sur une table dans une réunion ou qui est donné à une autre personne pour capturer la voix de cette personne.

2. Procédé selon la revendication 1, dans lequel au moins l'une desdites unités d'oreille (12R, 12L) comprend des moyens (M4, M5, 20, 22, 40) pour estimer la distance (d) entre l'agencement de microphones (M1, M2, M3) de l'unité d'émission (10) et l'unité d'oreille respective et des moyens pour compenser, dans les signaux audio traités (D1, D2), ladite distance estimée par retardement dans le temps et/ou par ajustement de niveau des signaux audio (D1) du premier canal et des signaux audio (D2) du deuxième canal entre eux en fonction de ladite distance estimée, les signaux audio du premier canal étant principalement délivrés aux moyens de stimulation d'oreille gauche (18, 26) et les signaux audio du deuxième canal étant principalement délivrés aux moyens de stimulation d'oreille droite (18, 26), les moyens d'estimation de distance (M4, M5, 20, 22, 40) étant conçus pour estimer ladite distance (d) par détermination du retard entre le temps d'arrivée d'un événement de son sur l'agencement de microphones (M1, M2, M3) de l'unité d'émission (10) et le temps d'arrivée du même événement de son sur un microphone (M4, M5, 20) de l'unité d'oreille (12R, 12L), le retard étant déterminé par une analyse temporelle des signaux audio capturés par l'agencement de microphones de l'unité d'émission et des signaux audio capturés par le microphone de l'unité d'oreille, et les moyens d'estimation de distance (M4, M5, 20, 22, 40) étant conçus pour déterminer ledit retard par analyse de corrélation des signaux audio capturés par l'agencement de microphone (M1, M2, M3) de l'unité d'émission (10) et des signaux audio capturés par le microphone (M4, M5) de l'unité d'oreille (12R, 12L).

3. Procédé selon la revendication 2, dans lequel les moyens d'estimation de distance (M4, M5, 20, 22, 40) sont conçus pour déterminer ledit retard par identification d'un événement de son d'impulsion et comparaison des temps d'arrivée de l'événement de son d'impulsion identifié sur l'agencement de microphones (M1, M2, M3) de l'unité d'émission (10) et sur le microphone (M4, M5, 20) de l'unité d'oreille (12R, 12L), et dans lequel les moyens d'estimation de distance (M4, M5, 20, 22, 40) sont conçus pour une sélection manuelle de la distance estimée et/ou comprennent des valeurs prédéfinies attribuées à des cas d'utilisation caractéristiques.

4. Procédé selon l'une des revendications précédentes, dans lequel les signaux audio transmis par l'intermédiaire desdits au moins premier canal (B1, C1) et deuxième canal (B2, C2) sont des signaux audio bruts, les moyens de traitement du signal audio (22, 40) étant conçus pour effectuer une formation de faisceau acoustique sur les signaux audio (C1, C2, C3) reçus par l'intermédiaire du premier canal et du deuxième canal, les moyens de traitement du signal audio (22, 40) pouvant être actionnés de façon sélective par l'utilisateur en ce qui concerne la direction et/ou la largeur angulaire du faisceau acoustique formé, l'agencement de microphones de l'unité d'émission (10) comprenant au moins trois des microphones mutuellement espacés (M1, M2, M3), les moyens de traitement du signal audio (22, 40) pouvant être actionnés de façon sélective par l'utilisateur afin d'effectuer une formation de faisceau acoustique sélective sur le canal respectif des au moins trois canaux reçus (C1, C2, C3) des signaux audio à l'intérieur de 360 degrés autour de l'agencement de microphones de l'unité d'émission, les moyens de traitement du signal audio (22, 40) pouvant être actionnés par l'utilisateur afin de sélectionner l'un d'une pluralité de modes de traitement du signal audio, les moyens de traitement du signal audio (22, 40) pouvant être actionnés par l'utilisateur afin de sélectionner le degré ou le type de formation de faisceau acoustique, les moyens de traitement du signal audio (22, 40) pouvant être actionnés de façon sélective par l'utilisateur à l'aide d'une commande à distance sans fil (42), la commande à distance (42) comprenant un élément de commande circulaire (46) pour sélectionner manuellement la largeur et la direction du faisceau acoustique formé, la commande à distance (42) étant conçue pour utiliser la même liaison (34) que lesdits au moins premier et deuxième canaux de signaux audio.

5. Procédé selon la revendication 4, dans lequel chacune des première (12R) et deuxième (12L) unités d'oreille comprend un microphone (M4, M5, 20) pour capturer des signaux audio devant être délivrés aux moyens de traitement du signal audio (22, 40) de telle sorte qu'ils soient pris en compte dans la génération desdits signaux audio traités (D1, D2) pour chaque oreille, et dans lequel les moyens de traitement du signal audio (22, 40) sont conçus pour utiliser les signaux audio capturés par les unités d'oreille (12R, 12L) afin d'éliminer un bruit de fond des signaux audio (C1, C2, C3) reçus à partir de l'unité d'émission (10) dans la génération desdits signaux audio traités (D1 D2).

6. Procédé selon l'une des revendications 4 et 5, dans lequel l'unité d'émission (10) et au moins l'une des unités d'oreille (12R, 12L) sont munies de moyens (68, 70) pour mesurer l'orientation angulaire relative entre la tête (66) de l'utilisateur et l'unité d'émission dans un plan, la direction du faisceau acoustique formé par les moyens de traitement du signal audio (22, 40) pouvant être commandée en fonction de l'orientation angulaire relative mesurée entre la tête de l'utilisateur et l'unité d'émission, lesdits moyens de mesure d'orientation (68, 70) étant conçus pour mesurer ladite orientation angulaire relative entre la tête de l'utilisateur et l'unité d'émission dans un plan sensiblement parallèle au sol, lesdits moyens de mesure d'orientation (68, 70) comprenant une boussole et/ou un gyroscope dans l'unité d'émission (10) et l'unité d'oreille (12R, 12L), et lesdits moyens de mesure d'orientation (68) étant conçus pour mesurer une orientation angulaire absolue de l'unité d'émission (10) et pour transmettre ladite orientation angulaire absolue mesurée de l'unité d'émission sans fil à l'unité d'oreille respective (12R, 12L).

7. Procédé selon la revendication 6, dans lequel l'unité de traitement du signal audio est conçue pour commander l'angle du faisceau acoustique formé par les moyens de traitement du signal audio de telle sorte qu'il soit essentiellement égal à la direction du nez (74) de l'utilisateur dans le plan dans lequel l'orientation angulaire relative entre la tête (66) de l'utilisateur et l'unité d'émission (10) est mesurée par les moyens de mesure d'orientation (68, 70).

8. Procédé selon l'une des revendications précédentes, dans lequel l'unité d'émission (10) est conçue pour transmettre des signaux audio venant d'une source audio (72) autre que l'agencement de microphones (M1, M2, M3), par l'intermédiaire du deuxième ou d'un troisième canal (A3, B3, C3), à au moins l'une des unités d'oreille (12R, 12L), la source de signal audio (72) étant un lecteur de musique, un téléphone mobile ou un dispositif de communication par radio, et dans lequel, dans l'un des modes de traitement du signal audio, le troisième canal (C3) est délivré à l'un des moyens de stimulation (18, 26), tandis que les premier (C1) et deuxième (C2) canaux sont délivrés à l'autre des moyens de stimulation (18, 26).

9. Procédé selon l'une des revendications précédentes, dans lequel les deux unités d'oreille (12R, 12L) sont conçues pour recevoir à la fois les premier (C1) et deuxième (C2) canaux de signaux audio, et dans lequel les deux unités d'oreille (12R, 12L) comprennent lesdits moyens de traitement du signal audio (22, 40).

10. Procédé selon l'une des revendications précédentes, dans lequel le premier canal (B1, C1) et le deuxième canal (B2, C2) sont transmis par l'intermédiaire des bandes latérales supérieure et inférieure, respectivement, d'une liaison radiofréquence à modulation de fréquence (34).

11. Procédé selon l'une des revendications 1 à 9, dans lequel le premier canal (B1, C1) et le deuxième canal (B2, C2) sont transmis par l'intermédiaire d'une liaison radio numérique.

12. Procédé selon l'une des revendications précédentes, dans lequel l'unité d'émission (10) est un dispositif portable destiné à être utilisé par une autre personne afin de capturer la voix de ladite personne et/ou à être utilisé par l'utilisateur des unités d'oreille (12R, 12L), chaque unité d'oreille (12R, 12L) comprenant un instrument d'audition (16) et une unité de récepteur (14) qui est connectée à l'instrument d'audition respectif (16) d'une façon détachable.

13. Procédé selon l'une des revendications précédentes, dans lequel les moyens de traitement du signal audio (40) sont inclus dans une unité de récepteur (14) d'au moins l'une des unités d'oreille (12R, 12L).

14. Procédé selon l'une des revendications 1 à 12, dans lequel les moyens de traitement du signal audio (22) sont inclus dans au moins l'un des instruments d'audition (16).
